# EUROPEAN PATENT APPLICATION

(11) **EP 3 434 410 A1**
(43) Date of publication of application: **30.01.2019**
(21) Application number: 17382499.6
(22) Date of filing: 27.07.2017
(51) Int. Cl.: B23K 26/00, B23K 26/06, B23K 26/08, B23K 26/16, B23K 26/38, B65H 26/00, B23K 26/21, B23K 26/082, B23K 26/382, B23K 26/352, B23K 101/16, B23K 103/00

(54) **CONTINUOUS WEB LASER TREATMENT MODULE WITH TWO FLAT PATH TREATMENT PORTIONS**

(71) Applicant: Comexi Group Industries, S.A.U, 17457 Riudellots de la Selva (Girona) (ES)
(72) Inventor: PRAT GIL, Jordi, 17002 Girona (ES); MATÓ REVERTER, Robert, 17455 Caldes de Malavella (Girona) (ES)
(74) Representative: Juncosa Miró, Jaime

(57) **Abstract**

The present application relates to a continuous web (4) laser treatment module comprising a web path including a first and second bridge path portion (51, 52) placed over a first and second maintenance passages (40, 41) and, between the first and second maintenance passages (40, 41), a first flat path treatment portion (21) for the laser treatment of the front face of said web material (4), oriented in vertical direction and facing a first laser group (31), an second flat path treatment portion (22) for the laser treatment of the back face of said web material (4) is also included wherein the back face of the web material (4) is facing a second laser group (32), said second laser group (32) being placed above the first and second maintenance passages (40, 41), said second laser group (32) being accessible from a first elevated maintenance passage (42, 43) which is placed above the first and second maintenance passages (40, 41).

## Description

### Technical field

The present invention relates to a continuous web laser treatment module, including a web material entrance and a web material exit connected through a web path, being a continuous web material transported along said web path, and said module including first laser group which projects laser beams over a front face of said web material, and a second laser group which projects laser beams over a back face of said web material, to burn it, cut it, print it, or to produce any other laser treatment on said web material continuously transported.

### State of the Art

The laser treatment of a web material transported continuously along a path is already known, for example by document US4302654 or EP1366890.

Also, the continuous web laser treatment with a laser generator provided with an automatic galvanometric mirror or lent, which can orientate the laser beam over different regions of the web material continuously transported, producing different laser treatment patterns.

Usually these laser treatment modules provided with galvanometric mirrors produce the laser treatment over a horizontal surface of the web material path, being the laser beam direction descendent, allowing the laser adjustment and the web material inspection from both lateral sides of the continuous web material. In some cases, the laser treatment module includes a web entrance and a web exit in a short distance regarding the floor on which the laser treatment module is supported, being said web entrance and said web exit covered with a platform, being therefore the laser treatment module accessible from over the web entrance and the web exit. Example of this embodiment is the invention described on document EP2881212.

These laser treatment modules cannot be used for food packaging because the short distance between the floor and the web material is not permitted to avoid the possibility of contamination of the web material produced by electrostatic attraction of the floor contaminants.

Other problems are produced for the horizontal position of the treatment web path. For example, the smoke produced during the laser treatment can contaminate the optic elements of the laser generator reducing their efficiency. Also, to maintain a constant web material tension is essential to avoid the web material buckling on the treatment horizontal web path in order to prevent a changing distance between the web material and the laser generator.

Document EP3170611 describe a continuous web laser treatment module including a web path portion oriented in vertical direction for the laser treatment of one face of the web material.

None of the previously cited documents describe how to produce a laser treatment on both opposed faces of the web material.

### Brief description of the invention

The present invention is related to a continuous web laser treatment module comprising:
- a web material transported along a web path in a given direction, said web material having a front face and a back face;
- a web material entrance to the laser treatment module;
- a web material exit of the laser treatment module placed downstream from the web material entrance;
- a frame supported on a floor;
- a plurality of guiding rollers (14), supported on said frame (50), said guiding rollers (14) defining said web path between the web material entrance (11) and the web material exit (12), said web path including a first bridge path portion (51) placed over a first maintenance passage (40); a second bridge path portion (52) placed over a second maintenance passage (41) and also including, between the first and second maintenance passages (40, 41), a first flat path treatment portion (21) oriented in vertical direction for the laser treatment of the front face of said web material, said the front face facing, on said first flat path treatment portion (21), a first laser group (31), being said first laser group (31) accessible from said first maintenance passage (40);

Said web material can be, as an illustrative and not limitative embodiment, a plastic sheet as for example PVC, Polyethylene, Polypropylene, PET or Polyamide sheet, a paper sheet, an aluminum sheet, a cardboard sheet, or can be also a single layer or a multilayer material made with different materials overlapped, for example PET/aluminum/Polyethylene, or Polyamide/Polyethylene, or Bioriented Polypropylene/Metalized Bioriented Polypropylene The web material entrance is an aperture, conduct or web path section which conducts the web material from the outside of the laser treatment module to the inside of the laser treatment module, preferably from a previous web treatment module to the laser treatment module. The web material exit is an aperture, conduct, or web path section which conducts the web material from the inside of the laser treatment module to the outside of the laser treatment module, preferably from the laser treatment module to a posterior web treatment module.

The laser treatment module can be connected, via a common web path, with a preceding module and with a posterior module in the web path transport direction. Said previous module will include a web material exit which will be connected with the laser treatment module, feeding its web material entrance. The posterior module will include a web material entrance fed from the laser treatment module web material exit.

Preceding and posterior modules are not part of the present invention.

Between the adjacent modules a web transport bridge will be included, guiding the web material through the distance existing between the preceding module and the laser treatment module and/or between the laser treatment module and the posterior module.

The laser treatment is a treatment of the web material produced through a laser beam, examples of this treatment can be, for example, cutting, burning, drawing, micro-perforating or welding the web material.

Typically, each laser generator includes a galvanometric mirror or lent, which can deflect the laser beam produced by the laser generator with high precision and with coordination with the web material transport velocity, according to a predefined pattern programed on a programmable logic controller which control the galvanometric mirror or lent movement.

First and second laser groups are aggrupation of laser generators. Each laser generator can produce a laser treatment on a band of the web material, said bands being typically narrower than the web material width, therefore a plurality of laser generators should be emplaced adjacent to each other to cover all the web material width, constituting a laser group.

The elevated position of the web material entrance and/or of the web material exit, placed overhead the first and second maintenance passage accessible for a user, provides the conditions to isolate the web material from external contamination, allowing the use of the proposed laser treatment module for food packaging manipulation. Even into the laser treatment module the web material is spaced apart from the floor avoiding the risk of contamination of said web material. This feature in combination with the elevated position of the web material entrance and exit allows the proposed laser treatment module to be integrated in a web treatment overhead plant, which is a plant for the food packaging treatment including high standard hygienic measures.

It will be understood that said first and second maintenance passages are accessible to operators, being said passages preferably perpendiculars to the web path moving direction.

The first maintenance passages created under the web material path, and in front of the first flat path section, permits the access of a user to a position where the first laser group is easily accessible for the user to allow the maintenance and adjustment of said laser generators.

An additional advantage provided by the described configuration is that the web material is always spaced from the floor permitting the use of this laser treatment module for the treatment of a web material destined to be transformed in food packaging.

Additionally, said first laser group can include two consecutive sub-groups of laser generators, each sub-group positionally adjustable arranged and supported on a support bridge integrated on said frame creating orientable laser beams. The first flat path treatment portion can also integrate two consecutive flat sub-sections wherein said laser beams are incident.

This feature permits to emplace the laser generators of one sub-group of laser generators centered between two adjacent bands of treated web material treated by the laser generators of the previous sub-group of laser generators, providing a better laser treatment of these in-between zones.

The present invention also includes the following new features:
- an second flat path treatment portion for the laser treatment of the back face of said web material is included between the web material entrance and the first flat path treatment portion or between the first flat path treatment portion and the web material exit, back face of the web material facing, on said second flat path treatment portion, a second laser group, being said second laser group placed above the first and second maintenance passages, being said second laser group accessible from a first elevated maintenance passage perpendicular to the web path, being said elevated maintenance passage placed above the first and second maintenance passages.

According to these new features the continuous web laser treatment module can treat the front and the back face of the web material with independent laser groups.

One first laser group treats the front face of the web material in a vertical first flat path treatment portion of the web path, and a second laser group treats the back face of the web material in a second flat path treatment portion, being said second laser group and said second flat path treatment portion placed above the first and second maintenance passages, upstream or downstream from the first flat path treatment portion.

This position of the second flat path treatment portion creates a double deck continuous web laser treatment module, wherein both faces of the web material can be treated, having the continuous web laser treatment module the same longitude than a continuous web laser treatment module for a single face web material treatment, saving space.

This double deck composition permits the laser treatment on two opposed sides of the web material, being both first and second laser groups accessible for its maintenance from a maintenance passage or from an elevated maintenance passage during the continuous web laser treatment module operation, without requiring a web material inversion operation by twisting, which require a space consuming twister unit to inverse the positions of the front face and the back face.

Treatment of both faces of the web material allows, for example, cutting from one side one layer of a multilayer web material creating an easy open, and engraving on the other side of the web material a serial number or control number.

Said second flat path treatment portion can be oriented in a horizontal direction or in a vertical direction. The vertical direction of the second flat path treatment portion has some additional benefits exposed below.

The laser treatment of the web material burns it and produce smoke which ascends. Being the first flat path treatment portion oriented in vertical position said smoke cannot affect the optical elements, a common problem in other configurations that can reduce the laser efficiency.

Also maintaining a constant distance between the web material and the laser generator is important to avoid laser defocus problems. Being the web material in horizontal position a buckling effect can be produced under the gravity effect if the web tension is not correct, precise and constant, but being the web material in vertical position the gravity does not produce a buckling effect on the web material, and therefore is easier to assure a constant distance between the web material and the laser generators. Despite this advantage, a web tension control device can be included in the laser treatment module or in the previous or the posterior module, to assure a perfect and constant web tension.

In some applications, the laser beam shall be perfectly focused in the web material, but in other applications this focusing is not so critical.

Therefore at least the first laser group faces a vertical first flat path treatment portion, where the precise and constant distance between the first laser group and the web material can be granted. The second laser group can face a vertical or a horizontal second flat path treatment portion, depending on the precision required on the laser treatment of the back side of the web material.

It is also proposed that the web path includes, between the second flat path treatment portion and the web material exit, an additional flat path inspection portion oriented in vertical direction, for the web material inspection, being the back face of the web material visible and accessible from a second elevated maintenance passage on said second flat path inspection portion, being said second elevated maintenance passage placed above the first and second maintenance passages. Typically said additional flat path inspection portion will include a stroboscopic light to be able to inspect an apparently static portion of the web material when said continuous web treatment module is in operation and the web material is in continuous movement.

According to this feature the second flat path treatment portion and the additional flat path inspection portion are consecutive and are placed between first and second elevated maintenance passages, being the second laser group accessible from the first elevated maintenance passage and being the additional flat path inspection portion accessible from the second elevated maintenance passage.

In addition, it is also proposed that the web path will include, between the first flat path treatment portion where the first laser group treats the front face of the web material and the second bridge path portion, a flat path inspection portion oriented in vertical direction. Said flat path inspection portion is intended for the web material inspection, being the front face of the web material visible and accessible from said second maintenance passage on said first flat path inspection portion.

Preferably said first and second laser group are positionally adjustable arranged and supported on a support bridges integrated on said frame, allowing changing its position along the support bridges.

Each laser generator of the first and second laser group will create a laser beam, and will be provided with an automatic galvanometric mirror or lent which deflect said laser beam providing an orientable laser beam incident on said web material.

According to an embodiment of the present invention that the first elevated maintenance passage is placed over the first maintenance passage, being the first bridge path portion there between, and the second elevated maintenance passage is placed over the second maintenance passage, being the second bridge path portion there between. According to this embodiment the second laser group is over the first laser group.

It is also proposed that the frame is made by two overlapped sub-frames, one supporting the first laser group and the correspondent first flat path treatment portion and guiding rollers constitutive of the lower deck, and another supporting the second laser group and the correspondent second flat path treatment portion and guiding rollers constitutive of the upper deck.

Thanks to this frame the continuous laser web treatment module can be modular, allowing the configuration of said continuous laser web treatment module for the laser treatment of the two opposed faces of the web material, or for only treating one face of the web material.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and not limitative, in which:
Fig. 1 shows a longitudinal section view of the laser treatment module including a first and second laser groups for treating front and back faces of the web material, being the first laser group facing a front face of the web material in a vertical first flat path treatment portion placed in a lower deck of the laser treatment module, and being the second laser group, placed upstream of the first laser group, facing a back face of the web material in a horizontal second flat path treatment portion placed on a second deck above the first laser group and above the first deck;
Fig. 2 shows an alternative embodiment like that shown on Fig. 1, being the second flat path treatment portion downstream regarding the first flat path treatment portion;
Fig. 3 shows an alternative embodiment like that of Fig. 1, being the second flat path portion vertical and placed upstream regarding the first flat path treatment portion;
Fig. 4 shows an alternative embodiment like that of Fig. 3, being the second flat path portion vertical and placed downstream regarding the first flat path treatment portion;

### Detailed description of an embodiment

The foregoing and other advantages and features will be more fully understood from the following detailed description of an embodiment with reference to the accompanying drawings, to be taken in an illustrative and not limitative, in which three web treatment modules are shown connected through a shared web path 20 of a web material 4 transported in a given direction.

The central module is a continuous web laser treatment module 2. The preceding module 1, in the web material transport direction, is an unwinder unit which unrolls said web material 4, for example a PVC sheet, feeding said web path 20.

In this example, the posterior module 3 emplaced downstream in the web material transport direction after the laser treatment module 2 is a rewinder unit, which rolls the web material 4 after the laser treatment performance in the laser treatment module 2, and the web material 4 is continuously transported from the precedent module 1 to the posterior module 3 through the laser treatment module 2.

As will be obvious for an expert, the modules emplaced upstream and downstream in the web material transport direction regarding the laser treatment module 2 can be different modules than those described having different functions.

Said preceding module 1 feed the web material 4 to a web material entrance 11 of the laser treatment module 2, being said web material entrance 11 placed at a certain distance from the floor, at least at 1,6 meters. The elevated position of the web material entrance 11 and a given distance between the preceding module 1 and the laser treatment module 2 define a first maintenance passage 40, which is accessible for a user and which is covered by the first bridge path portion 51 which guides the web material into the laser treatment module 2.

Said posterior module 3 is fed with web material 4 from the web material exit 12 of the laser treatment module 2, which is spaced a given distance from the posterior module 3 defining a second maintenance passage 41 under a second bridge path portion 52 which guide the web material 4 from the laser treatment module 2 to the posterior module 3.

Said web material exit 12 is placed at a certain distance from the floor, at least at 1,6 meters. The elevated position of the web material exit 12 and the distance between the laser treatment module 2 and the posterior module 3 define said second maintenance passage 41, which is accessible for a user and which is covered for the web material path section which is fed from the laser treatment module 2 to the posterior module 3.

Said laser treatment module 2 include a frame 50 supported on a floor and a plurality of guiding rollers 14 supported on said frame, said guiding rollers 14 defining a web path 20 across the laser treatment module 2.

Said web path 20 of the laser treatment module 2 includes a first flat path treatment portion 21 oriented in vertical direction, a second flat path treatment portion 22 and, optionally, a first flat path inspection portion 23 and a second flat path inspection portion 24.

The web material 4 faces, on the first flat path treatment portion 21, its front face to a first laser group for the laser treatment of said front face of the web material. Being the first flat path treatment portion 21 oriented in vertical direction, the first laser group 31 is in front of said first flat path treatment portion 21, being placed between the first flat path treatment portion 21 and the first maintenance passage 40. This position allows an easy access to the first laser group 31 from said first maintenance passage 40, and also prevents the smoke created during the laser treatment to interfere with the first laser group 31.

It is preferred to install a suction unit in the topmost part of the first flat path treatment portion 21 to suck and extract the smoke created.

On the second flat path treatment portion 22 the web material 4 faces its back face to a second laser group 23 for the laser treatment of said back face of the web material.

On said optional first and second flat path inspection portion 23 and 24 the web material is accessible and visible from a maintenance passage, to check the quality of the laser treatment produced on at least one face of said web material. Depending on the laser treatment produced on both sides of the web material, it will be recommendable to provide one flat path inspection portion for each face of the web material treated with laser.

A stroboscopic light emitting device is placed, on the shown embodiments, parallel to the first or second flat path inspection portion 23 or 24, emitting light through the flat path inspection portion 23 or 24 of the web material 4 and through an inspection window, being the light blinking at a given frequency coordinated with the velocity of the web material 4 transport in order to make visible, for an observer placed for example on the second maintenance passage 41 or on the second elevated maintenance passage 43, the laser treatment produced on the web material 4 despite the high velocity of the transport of the web material 4.

Each laser generator of the first laser group 31 is slidably arranged and supported on a first support bridge 33 supported on the frame 50, and each laser generator of the second laser group is slidably arranged and supported on a second support bridge 34 supported on the frame 50.

Each laser generator of the first and second laser groups 31 and 32 include an optical resonation chamber defined between two waveguiding electrodes facing each other and two resonator mirrors facing each other. When the first or second flat path treatment portion 21 or 22 is oriented in vertical direction, said optical resonation chamber is vertically oriented with an exit window placed on the top part of said optical resonation chamber, projecting a laser beam in vertical and ascending direction. Said emitted laser beam is then corrected and reoriented by means of optical elements such mirrors and lens, to redirect said laser beam in a direction incident on the web material 4, preferably perpendicular to the corresponding first and second flat path treatment portions 21 and 22, in order to produce the web material laser treatment on said first and second flat path treatment portions 21 and 22.

Said laser generators include also a galvanometric mirror or lent 63 which can be automatically oriented changing the direction of the laser beam 64 incident on the web material 4 providing an orientable laser beam 64. This galvanometric mirror or lent 63 is controlled through a programmable logic controller which is programmed with the patterns to be created by the laser treatment on the web material 4.

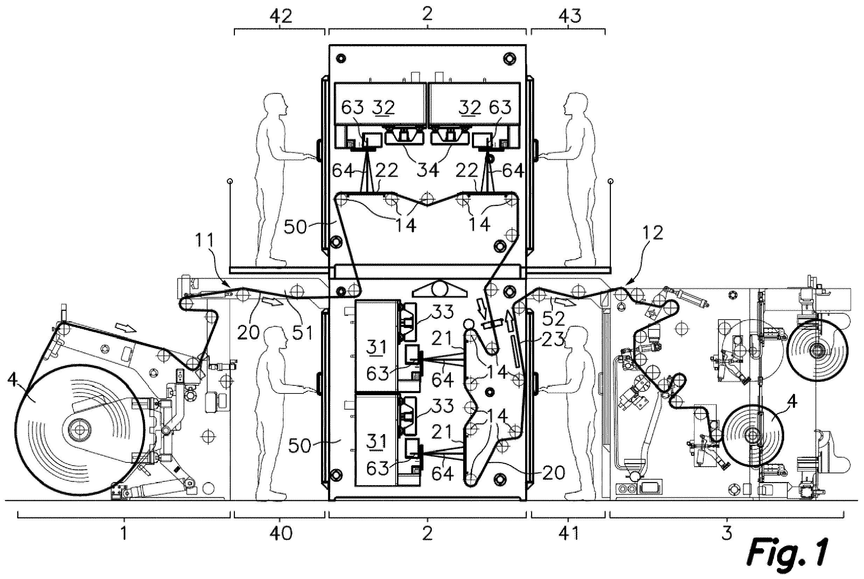

The embodiment shown on Fig. 1 includes, in this order in the transport direction of the web material along the web path 20, a second flat path treatment portion 22, a first flat path treatment portion 21, and a flat path inspection portion 23 for inspection of the front side of the web material.

In this embodiment, the second flat path treatment portion 22 is in a horizontal direction, placed between a first and second elevated maintenance passages 42 and 43. From said first and second elevated maintenance passages 42 and 43 the second laser group 32 is accessible for maintenance tasks.

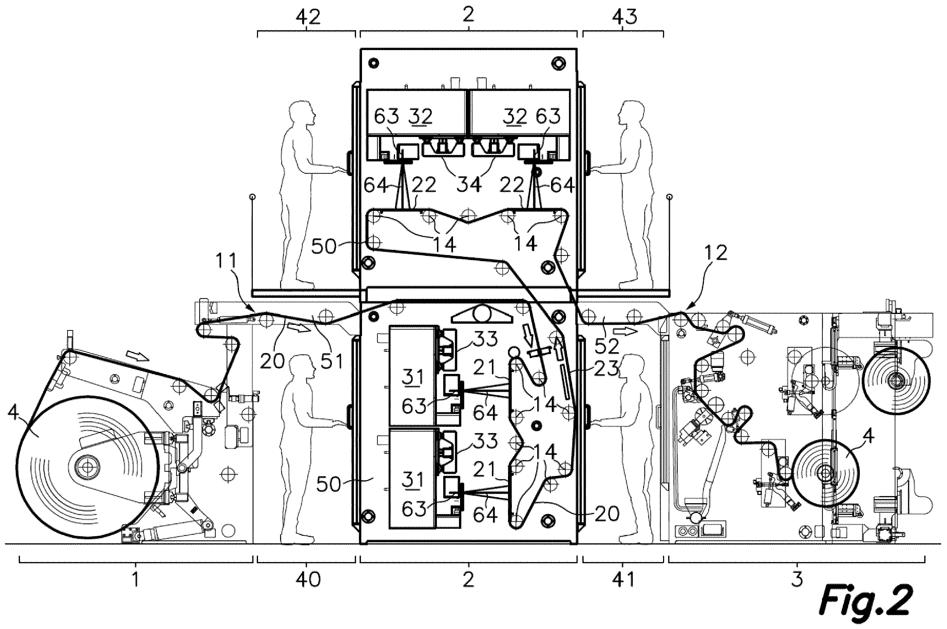

In Fig. 2 another embodiment is shown in which the web laser treatment module 2 includes, in this order, the first flat path treatment portion 21, the flat path inspection portion 23 facing the second maintenance passage 41, and the second flat path treatment portion 22 between the first and second elevated maintenance passages 42 and 43.

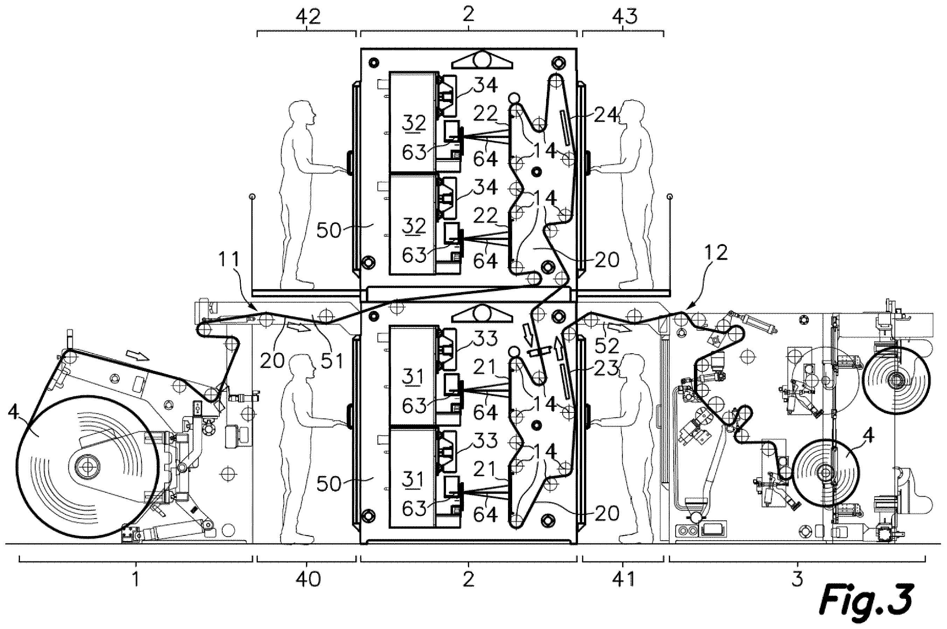

Fig. 3 shows an additional embodiment in which the web laser treatment module 2 includes, in this order, the second flat path treatment portion 22 oriented in vertical direction, being the correspondent second laser group 32 accessible from the first elevated maintenance passage 42, the second flat path inspection portion 24, accessible and visible from the second elevated maintenance passage 43, the first flat path treatment portion 21 also oriented in vertical direction, being the correspondent first laser group 31 accessible from the first maintenance passage 40, and the first flat path inspection portion 23 accessible and visible from the second maintenance passage 41.

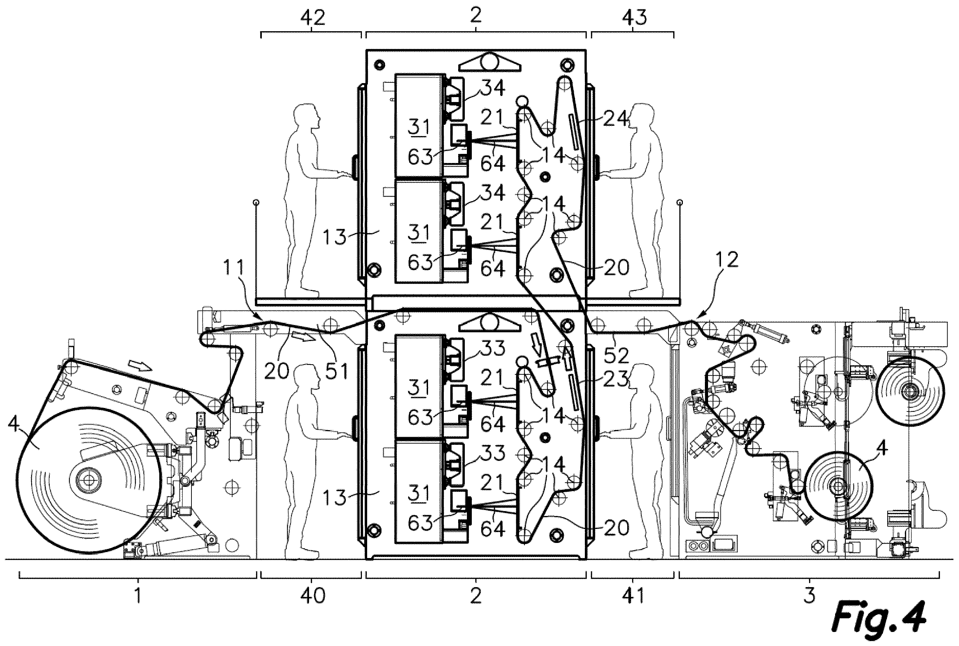

The embodiment shown on Fig. 4 is the same shown on Fig. 3 but the web path 20 passing first through the first flat path treatment portion 21 and the first flat path inspection portion 23, and then through the second flat path treatment portion 22 and the correspondent second flat path inspection portion 24.

In all the embodiments shown on the Figs. 1 to 4, the first elevated maintenance passage is placed over the first maintenance passage, and the second elevated maintenance passage is placed over the second maintenance passage.

First and second elevated maintenance passages will be accessible through stairs not shown.

The laser treatment produced on each front and back faces of the web material can include burning, cutting, micro-perforating, welding, printing, engraving, selective layer cutting, etc. All those laser treatments produce smoke, usually toxic smoke, therefore and for security reasons the interior of the laser treatment module 2 is un-accessible from the first and second maintenance passages 40 and 41 and from first and second elevated maintenance passages 42 and 43, being the access blocked by maintenance sliding doors, which include a glass for inspection of the process.

From the maintenance passages, and only after opening said maintenance sliding doors, the laser generators can be manipulated or adjusted. Preferably a sensor detects the opening of said maintenance sliding doors and stops the web material transportation and the laser treatment for security reasons.

Said maintenance sliding doors, the frame 50 of the laser treatment module 2 and the web path 20 determine a housing surrounding the first or second flat path treatment portions 21 and 22 where the smoke is created. Said housing is connected to an air suction device which suctions the smoke out of the installation.

Preferably each first and second laser groups 31 and 32 has an independent air suction device and, more preferably, an independent housing, including a separator between the lower deck containing the first laser group 31, and the upper deck containing the second laser group 32, preventing the smoke created on the first flat path treatment portion 21 to affect the web path placed over the first flat path treatment portion.

It will be understood that various parts of one embodiment of the invention can be freely combined with parts described in other embodiments, even being said combination not explicitly described, provided there is no harm in such combination.

## Claims

1. Continuous web laser treatment module (2) comprising:
• a web material (4) transported along a web path (20) in a given direction, said web material (4) having a front face and a back face;
• a web material entrance (11) to the laser treatment module (10);
• a web material exit (12) of the laser treatment module (10) placed downstream from the web material entrance (11);
• a frame (50) supported on a floor;
• a plurality of guiding rollers (14), supported on said frame (50), said guiding rollers (14) defining said web path between the web material entrance (11) and the web material exit (12), said web path including a first bridge path portion (51) placed over a first maintenance passage (40); a second bridge path portion (52) placed over a second maintenance passage (41) and also including, between the first and second maintenance passages (40, 41), a first flat path treatment portion (21) oriented in vertical direction for the laser treatment of the front face of said web material, said the front face facing, on said first flat path treatment portion (21), a first laser group (31), being said first laser group (31) accessible from said first maintenance passage (40);
**characterized in that**
an second flat path treatment portion (22) for the laser treatment of the back face of said web material (4) is included between the web material entrance (11) and the first flat path treatment portion (21) or between the first flat path treatment portion (21) and the web material exit (12), back face of the web material facing, on said second flat path treatment portion (22), a second laser group (32), being said second laser group (32) placed above the first and second maintenance passages (40, 41), being said second laser group (32) accessible from a first elevated maintenance passage (42) perpendicular to the web path (20), being said elevated maintenance passage (42) placed above the first and second maintenance passages (40, 41).

2. Continuous web laser treatment module (2) according to claim 1 wherein said second flat path treatment portion (22) is placed downstream of the first flat path treatment portion (21).

3. Continuous web laser treatment module (2) according to claim 2, wherein the second flat path treatment portion (22) is oriented in a horizontal direction.

4. Continuous web laser treatment module (2) according to claim 2, wherein the second flat path treatment portion (22) is oriented in a vertical direction.

5. Continuous web laser treatment module (2) according to claim 3 or 4 wherein the web path (20) includes, between the second flat path treatment portion (22) and the web material exit (12), an additional flat path inspection portion (24) oriented in vertical direction, for the web material inspection, being the back face of the web material (4) visible and accessible from a second elevated maintenance passage (43) on said second flat path inspection portion (24), being said second elevated maintenance passage (43) placed above the first and second maintenance passages (40, 41).

6. Continuous web laser treatment module (2) according to claim 1 wherein said second flat path treatment portion (22) is placed upstream of the first flat path treatment portion (21).

7. Continuous web laser treatment module (2) according to claim 6, wherein the second flat path treatment portion (22) is oriented in a horizontal direction.

8. Continuous web laser treatment module (2) according to claim 6, wherein the second flat path treatment portion (22) is oriented in a vertical direction.

9. Continuous web laser treatment module (2) according to claim 7 or 8 wherein the web path (20) includes, between the second flat path treatment portion (22) and the first flat path treatment portion (21), an additional flat path inspection portion (24) oriented in vertical direction, for the web material inspection, being the back face of the web material (4) visible and accessible from a second elevated maintenance passage (43) on said second flat path inspection portion (24), being said second elevated maintenance passage (43) placed above the first and second maintenance passages (40, 41).

10. Continuous web laser treatment module (2) according to any preceding claim wherein the web path (20) includes, between the first flat path treatment portion (21) and the second bridge path portion (52), a flat path inspection portion (23) oriented in vertical direction, for the web material inspection, being the front face of the web material (4) visible and accessible from said second maintenance passage (40) on said first flat path inspection portion (23).

11. Continuous web laser treatment module (2) according to any preceding claim wherein the first and second laser group (31 and 32) are positionally adjustable arranged and supported on correspondent first and second support bridges (33 and 34) integrated on said frame (50); each laser generator of the first and second laser group (31 and 32) creating a laser beam, and being provided with an automatic galvanometric mirror or lent (63) which deflect said laser beam providing an orientable laser beam (64) incident on said web material (4).

12. Continuous web laser treatment module (2) according to any preceding claim wherein the first elevated maintenance passage (42) is placed over the first maintenance passage (40), being the first bridge path portion (51) there between, and wherein the second elevated maintenance passage (43) is placed over the second maintenance passage (41), being the second bridge path portion (52) there between.

13. Continuous web laser treatment module (2) according to any preceding claim wherein the frame (50) is made by two overlapped sub-frames, one supporting the first laser group (31) and the correspondent first flat path treatment portion (21) and guiding rollers (14) constitutive of a lower deck, and another supporting the second laser group (32) and the correspondent second flat path treatment portion (22) and guiding rollers (14) constitutive of an upper deck.
